# EUROPEAN PATENT APPLICATION

(11) **EP 1 347 023 A1**
(43) Date of publication of application: **24.09.2003**
(21) Application number: 03075689.4
(22) Date of filing: 10.03.2003
(51) Int. Cl.: C09D 11/00, C09D 11/10, C08G 63/688

(54) **Inkjet ink composition and printing method**

(30) Priority: 21.03.2002 US 103474
(71) Applicant: EASTMAN KODAK COMPANY, Rochester, New York 14650 (US)
(72) Inventor: Chen, Huijuan Diana, c/o Eastman Kodak Company, Rochester, New York 14650-2201 (US); Teegarden, David M., c/o Eastman Kodak Company, Rochester, New York 14650-2201 (US)
(74) Representative: Weber, Etienne Nicolas

(57) **Abstract**

This invention relates to an inkjet ink composition comprising water, an organic pigment and a water-dispersible sulfonated polyester ionomer having an absolute molecular weight from 8000 to 50,000 and containing sulfonated groups in the range of 5 to 30 mol % of the total polyester. It further relates to an inkjet printing method, comprising the steps of:
providing an inkjet printer having a piezo print head, said printer being responsive to digital data signals;
loading the printer with an inkjet ink composition comprising water, a pigment and a water-dispersible sulfonated polyester ionomer having an absolute molecular weight from 8000 to 50,000 and containing sulfonated groups in the range of 5 to 30 mol % of the total polyester; and
printing in response to the digital data signals.

## Description

### FIELD OF THE INVENTION

This invention relates to an inkjet ink composition comprising a pigment and a water dispersible sulfonated polyester ionomer and an inkjet printing method employing said inkjet ink composition. Such an inkjet composition provides improved rubbing resistance and image stability to light and other environmental contaminants such as ozone.

### BACKGROUND OF THE INVENTION

Inkjet printing is a non-impact method for producing images by the deposition of ink droplets in a pixel-by-pixel manner on an image-recording element in response to digital signals. There are various methods which may be utilized to control the deposition of ink droplets on the image-recording element to yield the desired image. In one process, known as continuous inkjet, a continuous stream of droplets is charged and deflected in an imagewise manner onto the surface of the image-recording element, while unimaged droplets are caught and returned to an ink sump. In another process, known as drop-on-demand inkjet, individual ink droplets are projected as needed onto the image-recording element to form the desired image. Common methods of controlling the projection of ink droplets in drop-on-demand printing include piezoelectric transducers and thermal bubble formation. Inkjet printers have found broad applications across markets ranging from industrial labeling to short run printing to desktop document and pictorial imaging.

The inks used in the various inkjet printers can be classified as either dye-based or pigment-based. A dye is a colorant which is dissolved or dispersed in the carrier medium. A pigment is a colorant that is insoluble in the carrier medium, but is dispersed or suspended in the form of small particles, often stabilized against flocculation and settling by the use of dispersing agents. The carrier medium can be a liquid or a solid at room temperature in both cases. Commonly used carrier media include water, mixtures of water and organic co-solvents and high boiling organic solvents, such as hydrocarbons, esters, ketones, etc.

In traditional dye-based inks, no particles are observable under the microscope. Although there have been many recent advances in the art of dye-based inkjet inks, such inks still suffer from deficiencies such as low optical densities on plain paper and poor light-fastness. When water is used as the carrier, such inks also generally suffer from poor water fastness and poor smear resistance. These problems can be minimized by replacing the dyes used in ink formulations with insoluble pigments. In general, pigments are superior to dyes with respect to waterfastness, lightfastness, and stability towards pollutants in the air.

Pigment-based inks suffer from a different set of deficiencies than dye-based inks. One deficiency is that pigment-based inks interact differently with specially coated papers and films, such as transparent films used for overhead projection and glossy papers and opaque white films used for high quality graphics and pictorial output. In particular, it has been observed that pigment-based inks produce imaged areas that are entirely on the surface of coated papers and films. This results in images that have poor dry and wet adhesion properties and that can be easily smudged. There is a need to provide a pigmented ink composition that results in images on the surface of an inkjet receiving element which have improved durability and smudging resistance.

Ozone stability is another concern. Ozone is generally present in the air at sea level at concentration of about 10 to 50 parts per billion. Only under certain conditions does the ozone concentration exceed these levels. However, even at low ozone concentrations, inkjet dyes and pigments can be very sensitive and fade significantly when the air permeability is high, such as when they are printed onto porous, glossy receivers. Although inkjet receivers designed for outdoor usage tend to have good durability when printed with pigmented inks, they also fade significantly due to their exposure to ozone caused by high air permeability.

JP 08-259863A relates to an inkjet ink composition comprising a pigment and a polyester . In this publication, a variety of polyester ionomers which are able to form aspherical particles with different Tg, ionic groups and molecular weight were disclosed. U.S. Patent Application Serial No. 09/887,183 filed June 21, 2001 by Erdtmann et al discloses the use of an inkjet ink composition comprising a pigment and a water dispersible polymer such as a polyester, a polyurethane and an acrylic polymer. U.S. Patent 5,716,436 discloses an inkjet ink composition for a thermal inkjet printhead comprising water-dispersible polymers with an absolute molecular weight from 750 to 8000. However, images printed with these inks have low optical densities and very poor wet abrasion resistance and will not withstand outdoor applications. None of these references teaches the specific inkjet compositions comprising high molecular weight polymers which are the subject of the current invention nor the advantages of said compositions.

There is still a need for inkjet ink compositions and printing methods which provide images that have improved ozone fastness and physical durability such as scratch and smudging resistance.

### SUMMARY OF THE INVENTION

This invention provides an inkjet ink composition comprising water, an organic pigment and a water-dispersible sulfonated polyester ionomer having an absolute molecular weight from 8000 to 50,000 and containing sulfonated groups in the range of 5 to 30 mol % of the total polyester. This invention further provides an inkjet printing method, comprising the steps of providing an inkjet printer having a piezo print head said printer being responsive to digital data signals; loading the printer with an inkjet ink composition comprising water, a pigment and a water-dispersible sulfonated polyester ionomer having an absolute molecular weight from 8000 to 50,000 and containing sulfonated groups in the range of 5 to 30 mol % of the total polyester; and printing in response to the digital data signals.

The inkjet ink compositions of the invention have improved ozone fastness and physical durability such as scratch and smudging resistance. The inkjet ink compositions are particularly useful with piezo printheads which allow superior printing using high molecular weight inks. Piezo printheads better allow the jetting of high viscosity inks and have fewer kogation problems caused by material deposition on the printhead.

### DETAILED DESCRIPTION OF THE INVENTION

Pigments which may be used in the invention include those as disclosed, for example, in U.S. Patents 5,026,427; 5,086,698; 5,141,556; 5,160,370; and 5,169,436. The exact choice of pigments will depend upon the specific application and performance requirements such as color reproduction and image stability. Pigments suitable for use in the present invention include, for example, azo pigments, monoazo pigments, diazo pigments, azo pigment lakes, β-Naphthol pigments, Naphthol AS pigments, benzimidazolone pigments, diazo condensation pigments, metal complex pigments, isoindolinone and isoindoline pigments, polycyclic pigments, phthalocyanine pigments, quinacridone pigments, perylene and perinone pigments, thioindigo pigments, anthrapyrimidone pigments, flavanthrone pigments, anthanthrone pigments, dioxazine pigments, triarylcarbonium pigments, quinophthalone pigments, diketopyrrolo pyrrole pigments, titanium oxide, iron oxide, and carbon black. Typical examples of pigments which may be used include Color Index (C. I.) Pigment Yellow 1, 2, 3, 5, 6, 10, 12, 13, 14, 16, 17, 62, 65, 73, 74, 75, 81, 83, 87, 90, 93, 94, 95, 97, 98, 99, 100, 101, 104, 106, 108, 109, 110, 111, 113, 114, 116, 117, 120, 121, 123, 124, 126, 127, 128, 129, 130, 133, 136, 138, 139, 147, 148, 150, 151, 152, 153, 154, 155, 165, 166, 167, 168, 169, 170, 171, 172, 173, 174, 175, 176, 177, 179, 180, 181, 182, 183, 184, 185, 187, 188, 190, 191, 192, 193, 194; C. I. Pigment Orange 1, 2, 5, 6, 13, 15, 16, 17, 17:1, 19, 22, 24, 31, 34, 36, 38, 40, 43, 44, 46, 48, 49, 51, 59, 60, 61, 62, 64, 65, 66, 67, 68, 69; C. I. Pigment Red 1, 2, 3, 4, 5, 6, 7, 8, 9, 10, 11, 12, 13, 14, 15, 16, 17, 18, 21, 22, 23, 31, 32, 38, 48:1, 48:2, 48:3, 48:4, 49:1, 49:2, 49:3, 50:1, 51, 52:1, 52:2, 53:1, 57:1, 60:1, 63:1, 66, 67, 68, 81, 95, 112, 114, 119, 122, 136, 144, 146, 147, 148, 149, 150, 151, 164, 166, 168, 169, 170, 171, 172, 175, 176, 177, 178, 179, 181, 184, 185, 187, 188, 190, 192, 194, 200, 202, 204, 206, 207, 210, 211, 212, 213, 214, 216, 220, 222, 237, 238, 239, 240, 242, 243, 245, 247, 248, 251, 252, 253, 254, 255, 256, 258, 261, 264; C.I. Pigment Violet 1, 2, 3, 5:1, 13, 19, 23, 25, 27, 29, 31, 32, 37, 39, 42, 44, 50; C.I. Pigment Blue 1, 2, 9, 10, 14, 15:1, 15:2, 15:3, 15:4, 15:6, *15,* 16, 18, 19, 24:1, 25, 56, 60, 61, 62, 63, 64, 66; C.I. Pigment Green 1, 2, 4, 7, 8, 10, 36, 45; C.I. Pigment Black 1, 7, 20, 31, 32, and C.I. Pigment Brown 1, 5, 22, 23, 25, 38, 41, 42. In a preferred embodiment of the invention, the pigment is C.I. Pigment Blue 15:3, C.I. Pigment Red 122, C.I. Pigment Yellow 155, or C.I. Pigment Yellow 74, bis(phthalocyanylalumino)tetraphenyldisiloxane. Particularly suitable for the invention are organic pigments as organic pigments are more likely to fade due to ozone. Most suitable are bridged aluminum phthalocyanines.

The aqueous carrier medium for the ink composition is water or a mixture of water and at least one water miscible co-solvent. Selection of a suitable mixture depends on requirements of the specific application, such as desired surface tension and viscosity, the selected pigment, drying time of the pigmented inkjet ink, and the type of paper onto which the ink will be printed. Representative examples of water-miscible co-solvents that may be selected include (1) alcohols, such as methyl alcohol, ethyl alcohol, n-propyl alcohol, isopropyl alcohol, n-butyl alcohol, sec-butyl alcohol, t-butyl alcohol, iso-butyl alcohol, furfuryl alcohol, and tetrahydrofurfuryl alcohol; (2) ketones or ketoalcohols such as acetone, methyl ethyl ketone and diacetone alcohol; (3) ethers, such as tetrahydrofuran and dioxane; (4) esters, such as ethyl acetate, ethyl lactate, ethylene carbonate and propylene carbonate; (5) polyhydric alcohols, such as ethylene glycol, diethylene glycol, triethylene glycol, tetraethylene glycol, propylene glycol, polyethylene glycol, glycerol, 2-methyl-2,4-pentanediol 1,2,6-hexanetriol and thioglycol; (6) lower alkyl mono- or di-ethers derived from alkylene glycols, such as ethylene glycol mono-methyl (or -ethyl) ether, diethylene glycol mono-methyl (or -ethyl) ether, diethylene glycol mono-butyl (or -ethyl) ether, propylene glycol mono-methyl (or -ethyl) ether, poly(ethylene glycol) butyl ether, triethylene glycol mono-methyl (or -ethyl) ether and diethylene glycol dimethyl (or -ethyl) ether; (7) nitrogen containing cyclic compounds, such as pyrrolidone, N-methyl-2-pyrrolidone, and 1,3-dimethyl-2-imidazolidinone; and (8) sulfur-containing compounds such as dimethyl sulfoxide, 2,2'-thiodiethanol, and tetramethylene sulfone.

In general it is desirable to make the pigmented inkjet ink in the form of a concentrated mill grind, which is subsequently diluted to the appropriate concentration for use in the inkjet printing system. This technique permits preparation of a greater quantity of pigmented ink from the equipment. If the mill grind was made in a solvent, it is diluted with water and optionally other solvents to the appropriate concentration. If it was made in water, it is diluted with either additional water or water miscible solvents to the desired concentration. By dilution, the ink is adjusted to the desired viscosity, color, hue, saturation density, and print area coverage for the particular application. The method for the preparation of the mill grind is disclosed in U.S. Patents 5,679,138; 5,670,139 and 6,152,999.

In the case of organic pigments, the ink may contain up to approximately 30% pigment by weight, but will generally be in the range of approximately 0.1 to 10%, preferably approximately 0.1 to 5%, by weight of the total ink composition for most inkjet printing applications. If an inorganic pigment is selected, the ink will tend to contain higher weight percentages of pigment than with comparable inks employing organic pigments, and may be as high as approximately 75 % in some cases, since inorganic pigments generally have higher specific gravities than organic pigments.

The amount of aqueous carrier medium is in the range of approximately 70 to 99 weight %, preferably approximately 90 to 98 weight %, based on the total weight of the ink. A mixture of water and a polyhydric alcohol, such as diethylene glycol, is useful as the aqueous carrier medium. In a preferred embodiment, the inks contain from about 5 to about 60 weight % of water miscible organic solvent. Percentages are based on the total weight of the aqueous carrier medium.

The inkjet ink containing the water-dispersible polyester employed in the invention consists of water as a continuous phase and polyester ionomer as a dispersed phase. The pigment and the water dispersible polyester are present in the ink so that the pigment and the water dispersible polyester ionomer exist either individually or physically mixed. In a preferred embodiment of the invention, the polyester meets the following test: At 25°C, the polyester must: (a) be capable of forming a stable dispersion with water at a concentration of from 0.2 to 50 percent by weight, preferably 1 to 20 percent by weight, and (b) when 100 ml of the dispersion is then mixed in an equal volume of the water-miscible organic solvent described above, stirred and allowed to stand for 10 minutes exhibit no observable coagulation of the polyester dispersion. In general, the polyester dispersion should have an average particle size of 0.005 to 0.5 µm, preferably < 0.05 µm.

The water-dispersible polyester ionomers used in this invention are sulfonated polyester ionomers containing sulfonated groups in the range of 5 to 30 mol % of the total polyester, and more preferably 10 to 20 mol % of the total polyester. They have an absolute molecular weight of 8,000 to 50,000, more preferably of 8,000 to 40,000, and most preferably of 8,000 to 30,000. They are substantially hydrophobic, amorphous thermoplastic polymers in which ionic groups or moieties are present in sufficient concentration to provide water dispersibility. The polyester ionomers useful in the invention comprise dicarboxylic acid recurring units typically derived from dicarboxylic acids or their functional equivalents and diol recurring units typically derived from diols or their functional equivalents. Compounds which are functional equivalents of dicarboxylic acids include dicarboxylic acid chlorides, dicarboxylic acid bromides, dicarboxylic acid esters, dicarboxylic acid anhydrides and other compounds known to those skilled in the art which will react in standard procedures to provide a polyester. Compounds which are functional equivalents of diols include metal alkoxides, bisphenols, and other compounds known to those skilled in the art which will react in standard procedures to provide a polyester. The sulfonated ionic moieties can be provided by either ionic diol recurring units and/or ionic dicarboxylic acid recurring units, but preferably the latter. Sulfonic acid ionic groups, or salts or derivatives thereof, are preferred. The polyester may contain other ionic groups in addition to the sulfonated groups.

In the preferred embodiment the water dispersible polyester ionomer comprises nonionic and ionic dicarboxylic acid recurring units. In one embodiment the preferred nonionic dicarboxylic acid recurring unit is an isophthalate unit and is present in a mole fraction from approximately 0.7 to approximately 0.95, more preferably from approximately 0.8 to approximately 0.90. The ionic dicarboxylic acid recurring unit preferred in the invention is a 5-sulfoisophthalate unit and is present in a mole fraction from approximately 0.05 to 0.3, more preferably from approximately 0.01 to 0.2.

Preferred diol recurring units include one or more selected from ethylene glycol, diethylene glycol, triethylene glycol, thiodiethanol, 1,4-cyclohexanedimethanol, bisphenol A, trans-1,4-cyclohexanediol, dodecanediol, cis-exo-2,3-norbomanediol, 5-norbornene-2,2-dimethanol, hydroquinone bis(2-hydroxyethylether) and carbinol terminated polydimethylsiloxane. More preferred are diethylene glycol and 1,4-cyclohexanedimethanol.

In another embodiment the water-dispersible polyester ionomers preferred for use in this invention contain dicarboxylic acid recurring units and diol recurring units consistent with the following general formula:

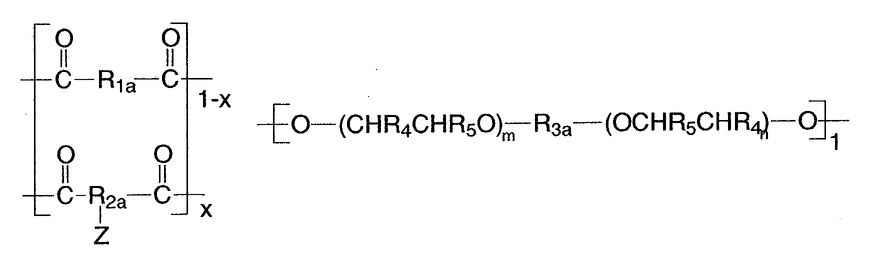

R₁ₐ represents a saturated or unsaturated divalent aliphatic, cyclic or aromatic hydrocarbon group or combinations thereof. Examples of appropriate group include 1,2-phenylene, 1,3-phenylene, 1,4-phenylene, 1,4-naphthylene, 2,6-naphthylene, 4,4'-oxydiphenylene, 1,4-cyclohexylene, 1,2-ethylene, 1,4-butylene, and the like. R₂ₐ represents the same moieties as R₁ₐ, except that it also bears the group Z. Z represents an ionic moiety derived from a sulfonic acid. x represents a mole fraction from about 0.05 to about 0.3. The dicarboxylic acid recurring units from the formula above bearing an ionic moiety derived from a sulfonic acid, i.e., 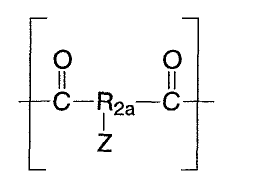 useful in the invention include the following:

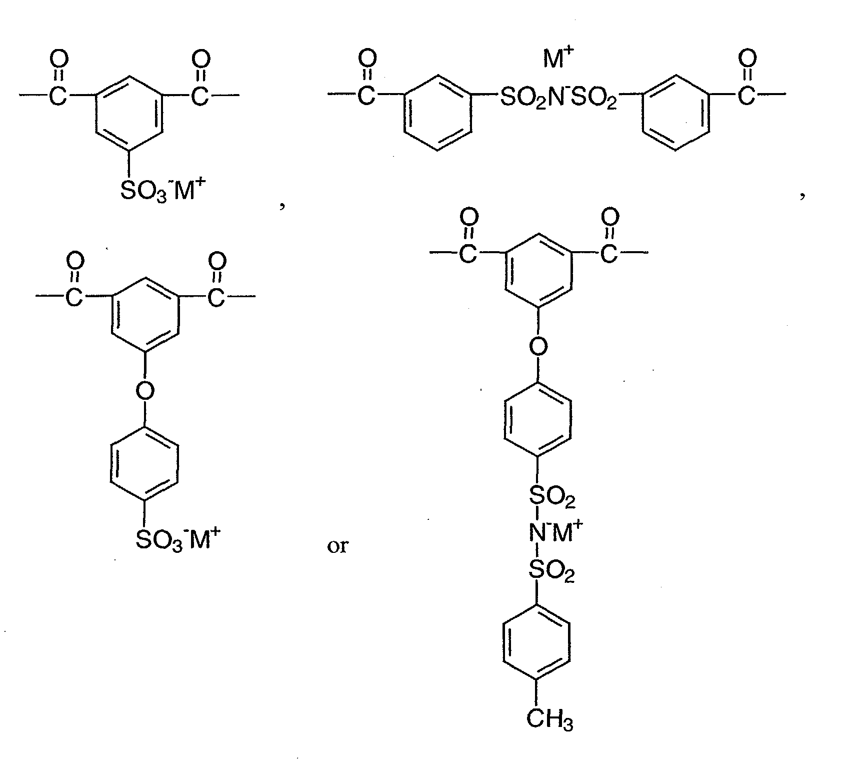

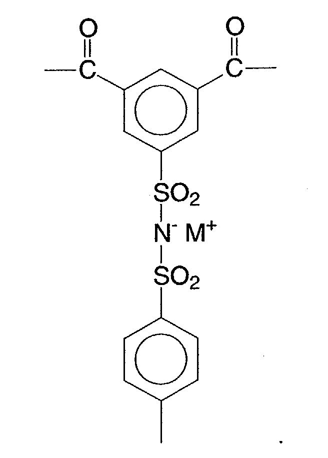

M⁺ is an appropriate cation. Examples of M⁺ include alkali metals, such as Li, Na and K; ammonium groups such as ammonium, trimethylammonium, triethylammonium, tetraalkylammonium, aryltrialkylammonium, hydroxyalkylammonium, etc.; phosphonium groups such as triphenylphosphonium and tetrabutylphosphonium; heteroaromatic ammonium groups such as pyridinium, imidazolium and N-methylammonium; sulfonium groups; guanidinium groups; and amidinium groups. M⁺ is preferably an alkali metal, for example, Na⁺.

R₃ₐ represents an alkylene group of 1 to about 16 carbon atoms; a cycloalkylene group of 5 to about 20 carbon atoms; a cyclobisalkylene group of about 8 to about 20 carbon atoms, a bi- or tri-cycloalkylene group of about 7 to about 16 carbon atoms, a bi- or tri-cyclobisalkylene group of about 9 to about 18 carbon atoms, an arenebisalkylene group of from 8 to about 20 carbon atoms or an arylene group of 6 to about 12 carbon atoms, or a carbinol-terminated polydimethylsiloxane segment. R₄ and R₅ each independently represents H, a substituted or unsubstituted alkyl group of about 1 to about 6 carbon atoms, or a substituted or unsubstituted aryl group of about 6 to about 12 carbon atoms. m and n independently represent an integer from 0-4.

Other recurring units may be incorporated into the polymer in addition to the dicarboxylic and diol recurring units described above. In addition to the dicarboxylic acid recurring units mentioned above, other carboxylic acids or their functional equivalents can be incorporated in the polyester useful for the invention. These include monocarboxylic acids such as, for example, benzoic acid, substituted benzoic acids, naphthoic acid, substituted naphthoic acids, cyclohexanecarboxylic acid, hexanoic acid, lauric acid, sulfobenzoic acid salts, etc. Other carboxylic acids or their functional equivalents include maleic acid, fumaric acid, citraconic acid, itaconic acid, mesaconic acid, and other carboxylic acids containing ethylenic unsaturation. Still other carboxylic acids or their functional equivalents are pyromellitic acid, trimellitic acid, trimesic acid, and other polycarboxylic acids.

In addition to the diol recurring units mentioned above, other hydroxy-containing compounds or their functional equivalents can be incorporated in the polyester useful for the invention. These include phenols, hydroxybenzoic acid, cyclohexanol, lauryl alcohol, alcohols or diols containing ethylenic unsaturation, and polyols such as glycerol, trimethylol propane, and pentaerythritol.

Examples of water dispersible polyesters useful in the invention include Eastman AQ® polyesters, (Eastman Chemical Company). Eastman Polyesters AQ 29, AQ 38, and AQ 55 are composed of varying amounts of isophthalic acid, sodium sulfoisophthalic acid, diethylene glycol, and 1,4-cyclohexanedimethanol, and the ionic mole % are approximately 11%, 11%, and 18 % respectively. These thermoplastic, amorphous, ionic polyesters are prepared by a melt-phase condensation polymerization at high temperature and low pressure, and the molten product is extruded into small pellets. The solid polymer disperses readily in water at 70°C with minimal agitation to give translucent, low viscosity dispersions containing no added surfactants or solvents. Varying the amount of ionic monomers, i.e., sulfoisophthalic acid, can control the particle size, which is normally from approximately 0.01 to 0.1 µm. The water dispersible sulfonated polyester used in the current invention is present in the inkjet ink generally from 0.5% to about 10% by weight.

A humectant is employed in the inkjet composition of the invention to help prevent the ink from drying out or crusting in the orifices of the printhead. Examples of humectants which can be used include polyhydric alcohols, such as ethylene glycol, diethylene glycol, triethylene glycol, propylene glycol, tetraethylene glycol, polyethylene glycol, glycerol, 2-methyl-2,4-pentanediol 1,2,6-hexanetriol and thioglycol; lower alkyl mono- or di-ethers derived from alkylene glycols, such as ethylene glycol mono-methyl or mono-ethyl ether, diethylene glycol mono-methyl or mono-ethyl ether, propylene glycol mono-methyl or mono-ethyl ether, triethylene glycol mono-methyl or mono-ethyl ether, diethylene glycol di-methyl or di-ethyl ether, and diethylene glycol monobutylether; nitrogen-containing cyclic compounds, such as pyrrolidone, N-methyl-2-pyrrolidone, and 1,3-dimethyl-2-imidazolidinone; and sulfur-containing compounds such as dimethyl sulfoxide and tetramethylene sulfone. A preferred humectant for the composition of the invention is diethylene glycol, glycerol, or diethylene glycol monobutylether.

Water-miscible organic solvents may also be added to the aqueous ink of the invention to help the ink penetrate the receiving substrate, especially when the substrate is a highly sized paper. Examples of such solvents include alcohols, such as methyl alcohol, ethyl alcohol, n-propyl alcohol, isopropyl alcohol, n-butyl alcohol, sec-butyl alcohol, t-butyl alcohol, iso-butyl alcohol, furfuryl alcohol, and tetrahydrofurfuryl alcohol; ketones or ketoalcohols such as acetone, methyl ethyl ketone and diacetone alcohol; ethers, such as tetrahydrofuran and dioxane; and esters, such as, ethyl lactate, ethylene carbonate and propylene carbonate.

Surfactants may be added to adjust the surface tension of the ink to an appropriate level. The surfactants may be anionic, cationic, amphoteric or nonionic. A biocide may be added to the ink composition of the invention to suppress the growth of microorganisms such as molds, fungi, etc. in aqueous inks. A preferred biocide for the ink composition of the present invention is Proxel® GXL (Zeneca Specialties Co.) at a final concentration of 0.0001-0.5 wt. %.

The pH of the aqueous ink compositions of the invention may be adjusted by the addition of organic or inorganic acids or bases. Useful inks may have a preferred pH of from about 2 to 10, depending upon the type of dye being used. Typical inorganic acids include hydrochloric, phosphoric and sulfuric acids. Typical organic acids include methanesulfonic, acetic and lactic acids. Typical inorganic bases include alkali metal hydroxides and carbonates. Typical organic bases include ammonia, triethanolamine and tetramethylethlenediamine. Additional additives which may optionally be present in the inkjet ink composition of the invention include thickeners, conductivity enhancing agents, anti-kogation agents, drying agents, and defoamers.

The inkjet inks provided by this invention may be employed in inkjet printing wherein liquid ink drops are applied in a controlled fashion to an ink receptive layer substrate, by ejecting ink droplets from a plurality of nozzles or orifices of the print head of an inkjet printer. The preferred print heads are piezo printheads, those which use piezoelectric elements to generate ink droplets by vibration of the element upon electric signal. Such printheads are well known to those skilled in the art and are widely used in commercially available printers such as those made by Epson and Brother. Piezo printheads are preferred for use with the inkjet inks of the invention as the high molecular weight polymer increases the viscosity of the ink. High viscosity inkjet inks jet more efficiently through piezo printheads than other types of printheads. Further, thermal printheads tend to have a kogation problem caused by material deposition on the printhead heating element due to very high heat. There is no such problem with piezo printheads.

Ink-receptive substrates useful in inkjet printing are well known to those skilled in the art. Representative examples of such substrates are disclosed in U.S. Patents 5,605,750; 5,723,211; and 5,789,070 and EP 813 978 A1.

The following example is intended to illustrate, but not to limit, the present invention.

### EXAMPLE

### Example 1

### Preparation of Pigment Dispersion

### Cyan Pigment Dispersion

| Mill Grind | |
|---|---|
| Polymeric beads, mean diameter of 50 µm (milling media) | 8000 g |
| Bridged aluminum phthalocyanine pigment (Eastman Kodak) | 1600 g |
| Oleoyl methyl taurine, (OMT) Potassium salt | 960 g |
| Deionized water | 5440 g |

The above components were milled in a 40 liter double walled vessel obtained from BYK-Gardner using a high energy media mill manufactured by Morehouse-Cowles Hochmeyer. The mill was run for approximately 8 hours at room temperature. The dispersion was separated from the milling media by filtering the mill grind through a 4-8 µm KIMAX® Buchner Funnel obtained from VWR Scientific Products. An additional 8000 g of dilution water was added to the filtered dispersion followed by a biocide, Proxel® GXL (Zeneca Corp.). The pigment was about 10.0% by weight of the total final dispersion and the biocide was about 230 ppm by weight of the total final dispersion.

### Characterization of Polyester Ionomers

The polyester ionomers used in the following examples were characterized by the following analytical techniques:

### Glass Transition Temperature

The glass transition temperature (Tg) of the dry polymer was determined by differential scanning calorimetry (DSC), using a heating rate of 10°C/minute. Tg is defined herein as the midpoint in the inflection of a plot of specific heat versus temperature.

### Particle Size Measurement

All particles were characterized by MICROTRAC II Ultrafine particle analyzer (UPA) manufactured by Leeds & Northrup. The data reported are the size that 50% of the volume in the sample is smaller than the indicated size, which is also known as the median diameter.

### Average Molecular Weight

The samples were analyzed by size-exclusion chromatography (SEC) with viscometry detection in N,N-dimethylformamide (DMF) containing 0.01M lithium nitrate using two Jordi Gel® mixed-bed columns. Absolute molecular weights were calculated from the viscosity data and a universal calibration curve constructed from narrow-molecular weight distribution poly(ethylene oxide) standards between MW 645 (log M = 2.80) and MW 865,000 (log M = 5.94).

### Preparation of polyester ionomers

### Polyester ionomer 1 (P-1). Poly[2,2'-oxydiethylene-co-1,4-cyclohexanedimethylene (57/43) isophthalate-co-5-sodiosulfoisophthalate (82/18)] dispersion

A 250-mL long-necked round-bottomed flask was charged with 16.0 g of dimethyl 5-sulfoisophthalate sodium salt, 47.8 g of dimethyl isophthalate, 25.4 g of diethylene glycol, 18.6 g of 1,4-cyclohexanedimethanol, 0.06 g of methyl 2-naphthoate, 0.44 g of sodium acetate, and 0.05 g of Irganox 1010®. The flask was fitted with a side-arm adapter and a N₂ inlet tube extending to the bottom of the flask. The adapter was connected to a condenser and receiver. The flask was placed in a salt bath at 200°C under a gentle N₂ flow. When the reaction mixture had melted, 4 drops of titanium isopropoxide were added. The temperature of the reaction mixture was raised to 240°C over approximately 3 hr, by which time methanol had stopped distilling. The N₂ inlet tube was replaced with a mechanical stirrer, and the pressure inside the flask was reduced to approximately 0.02 torr over about 1 hr. The polymerization mixture was stirred slowly at this temperature and pressure for approximately 1.5 hr. The copolymer was allowed to cool under a N₂ atmosphere, and then the solid polymer was broken out of the flask. The polyester ionomer had a Tg of 43.3°C and an absolute weight average molecular weight of 8600.

A 500 mL 3-necked round-bottomed flask fitted with a mechanical stirrer and reflux condenser was charged with 150 mL of deionized water and heated to 90°C. With rapid stirring, 50 g of the polyester ionomer above was added gradually and the dispersion was heated at 90°C for approximately 2 hr. The heat was removed, and the dispersion was stirred at room temperature overnight. The mixture was filtered, affording a slightly hazy dispersion containing 25.2 wt% polymer.

### Polyester Ionomer 2 (P-2) (AQ55)

An AQ55® dispersion was commercially available from Eastman Chemical Co. and was used as received at 28% solids by weight. The ionic group content was ∼18 mol %. The Tg was 55°C as measured by DSC and particle size was 20 nm as measured by UPA.

### Polyester ionomer 3 (P-3). Poly[2,2'-oxydiethylene-co-1,4-cyclohexanedimethylene (57/43) isophthalate-co-5-sodiosulfoisophthalate (70/30)] dispersion

The polyester was prepared the same as P-1, except that 26.7 g of dimethyl 5-sulfoisophthalate sodium salt, 40.8 g of dimethyl isophthalate, no methyl 2-naphthoate, and 0.74 g of sodium acetate were used. The polyester ionomer had a Tg of 62.0°C and an absolute weight average molecular weight of 20,200. The polyester was dispersed the same as polyester P-1, affording a slightly hazy dispersion containing 25.7 wt% polymer.

### Polyester ionomer 4 (P-4). Poly[2,2'-oxydiethylene-co-1,4-cyclohexanedimethylene (57/43) isophthalate-co-5-sodiosulfoisophthalate (60/40)] dispersion

The polyester was prepared the same as P-1, except that 35.5 g of dimethyl 5-sulfoisophthalate sodium salt, 35.0 g of dimethyl isophthalate, no methyl 2-naphthoate, and 0.98 g of sodium acetate were used. The polyester ionomer had a Tg of 65.2°C, and an absolute weight average molecular weight of 9600. The polyester was dispersed the same as polyester P-1, affording a slightly hazy dispersion containing 26.7 wt% polymer.

### Polyester ionomer 5 (P-5). Poly[2,2'-oxydiethylene-co-1,4-cyclohexanedimethylene (57/43) isophthalate-co-5-sodiosulfoisophthalate (50/50)] dispersion

The polyester was prepared the same as P-1, except that 44.4 g of dimethyl 5-sulfoisophthalate sodium salt, 29.1 g of dimethyl isophthalate, no methyl 2-naphthoate, and 1.23 g of sodium acetate were used. The Tg of the polyester ionomer was not obtained, and it had an absolute weight average molecular weight of 10,300. The polyester was dispersed the same as polyester P-1, affording a slightly hazy dispersion containing 26.9 wt% polymer.

### Ink preparation

### Comparative Ink C-1 (No polymer)

To prepare a comparative inkjet ink, 8.8 g of Cyan Pigment Dispersion (10% active), 0.20 g Surfynol® 465 (from Air Products), 7.0 g glycerol, 4.0 g diethylene glycol, and 2.40 g diethylene glycol monobutyl ether (Dowanol® DB) were added to distilled water to make 40 g of ink. The final ink contained 2.2% bridged aluminum phthalocyanine cyan pigment, 0.50% Surfynol® 465, 17.5% glycerol, 10% diethylene glycol and 6% Dowanol DB. The solution was filtered through a 3 µm polytetrafluoroethylene filter and filled into an empty Epson 660 inkjet ink cartridge.

### Comparative Ink C-2 (with Polymer P-4)

This ink was prepared similar to Comparative Ink C-1 except that 2.26 g of polyester P-4 (26.7% active) was added in addition to the ink such that the ink also contained 1.5% of P-4.

### Comparative Ink C-3 (with Polymer P-5)

This ink was prepared similar to Comparative Ink C-2 except that 2.23 g of Polyester P-5 (26.9% active) was used instead of Polyester P-4.

### Ink 1 of the Invention I-1

An ink similar to Comparative Ink 1 was prepared except that Cyan Pigment Dispersion and polyester ionomer P-1 were both used instead of the Cyan Pigment Dispersion alone. To prepare this ink, 8.8 g of Cyan Pigment Dispersion (10% active), 2.38 g of Polyester Ionomer P-1 (25.2% by weight), 0.20 g Surfynol® 465 (from Air Products), 7.0 g glycerol, 4.0 g diethylene glycol, and 2.40 g diethylene glycol monobutyl ether (Dowanol® DB) were added to distilled water to make 40.0 g of ink. The final ink contained 2.2% bridged aluminum phthalocyanine cyan pigment, 1.5% P1, 0.50% Surfynol® 465, 17.5% glycerol, 10% diethylene glycol and 6% Dowanol DB. The solution was filtered through a 3 µm polytetrafluoroethylene filter and filled into an empty Epson 660 inkjet cartridge.

### Ink 2 of the Invention I-2

An ink similar to Ink I-1 was prepared except that 1.97 g polyester Ionomer P-2 (28% active) was used instead of polyester P-1.

### Ink 3 of the Invention I-3

An ink similar to Ink I-1 was prepared except that 2.38 g polyester P-3 (25.7% active) was used instead of polyester P-1.

### Printing

Elements were prepared using test images consisting of a series of 5 variable density patches, approximately 15 by 13 mm in size, ranging from 0% dot coverage to 100% dot coverage printed onto commercially available Epson Premium Glossy Paper, Cat. No SO41286 with an EPSON 660 inkjet printer, using the above inks. The elements were allowed to dry for 24 hours at ambient temperature and humidity.

### Wet and Dry Rub Resistance

The above inks were coated on the above inkjet recording elements. A wet rub resistance test was carried out by placing an approximately 2.54 cm diameter water droplet on the ink-coated sample surface for 2 minutes, after which the excess water was gently wiped off using a paper towel. The above treated area was then rubbed with a dry paper towel for 4 passes under a pressure of 200 grams over a 3.5 cm diameter area. The tested areas were examined visually and assigned a rating of 1 to 5.
1 means most of ink in the tested areas being wiped off,
2 means significant amount of ink in the tested areas being wiped off,
3 means noticeable amount of ink in the tested areas being wiped off,
4 means slight amount of ink in the tested areas being wiped off,
5 means no ink in the tested areas being wiped off.

A dry rub resistance test was carried out by rubbing the samples with a dry paper towel for 4 passes under a pressure of 200 grams over a 3.5 cm diameter area. A rating was assigned similar to the wet rub test described above. The results are listed in Table 1 below.

### Stability Tests

The above elements were then placed in an ozone chamber (∼5 ppm ozone level, 50% relative humidity) for 48 hours. The Status A reflection densities of the 75 % dot coverage density patch of the elements were measured using an X-Rite® 414 densitometer before and after the light and ozone fade test. The percentages of the Status A densities retained for the 75% dot coverage patches were calculated and are also listed in Table 1.

**Table 1**

| Element Containing Ink | Polyester Ionic Content (mol %) | Ozone Test (% Retained) | Wet Durability Rating | Dry Durability Rating |
|---|---|---|---|---|
| C-1 | _ | 50 | 1 | 2 |
| C-2 | 40 | 89 | 3 | 3 |
| C-3 | 50 | 80 | 2 | 3 |
| I-1 | 18 | 93 | 5 | 5 |
| I-2 | 18 | 92 | 5 | 5 |
| I-3 | 30 | 95 | 4 | 5 |

The above results in Table 1 show that the elements of the invention had improved ozone stability and durability as compared to the control elements.

## Claims

1. An inkjet ink composition comprising water, an organic pigment and a water-dispersible sulfonated polyester ionomer having an absolute molecular weight from 8000 to 50,000 and containing sulfonated groups in the range of 5 to 30 mol % of the total polyester.

2. The inkjet ink composition of claim 1 wherein the sulfonated polyester ionomer contains sulfonated groups in the range of 10 to 20 mol % of the total polyester.

3. The inkjet ink composition of claims 1 and 2 wherein the said polyester ionomer has a Tg of -45 to + 80°C.

4. The inkjet ink composition of claims 1 to 3 wherein the water is the continuous phase and the polyester ionomer is the dispersed phase.

5. The inkjet ink composition of claim 4 wherein the polyester dispersion has an average particle size of < 0.5 µm.

6. The inkjet ink composition of claim 4 wherein the polyester dispersion has an average particle size of < 0.05 µm.

7. The inkjet ink composition of claims 1 to 6 wherein the water-dispersible polyester ionomer is a hydrophobic, amorphous, thermoplastic polymer in which sulfonated ionic groups or moieties are present in sufficient concentration to provide water dispersibility.

8. The inkjet ink composition of claims 1 to 7 wherein the water-dispersible polyester ionomer comprises dicarboxylic acid recurring units derived from dicarboxylic acids or their functional equivalents, and diol recurring units derived from diols or their functional equivalents, and wherein the sulfonated ionic moieties are contained in either the diol recurring units and/or the dicarboxylic acid recurring units.

9. The inkjet ink composition of claims 1 to 8 wherein the water-dispersible polyester ionomer comprises nonionic and ionic dicarboxylic acid recurring units, said nonionic dicarboxylic acid recurring units being isophthalate units present in a mole fraction from approximately 0.7 to approximately 0.95; and said ionic dicarboxylic acid recurring unit being 5-sulfoisophthalate units present in a mole fraction from approximately 0.05 to approximately 0.3.

10. The inkjet ink composition of claim 9 wherein the diol recurring units are ethylene glycol, diethylene glycol, triethylene glycol, thiodiethanol, 1,4-cyclohexanedimethanol, bisphenol A, trans-1,4-cyclohexanediol, dodecanediol, cis-exo-2,3-norbomanediol, 5-norbornene-2,2-dimethanol, hydroquinone bis(2-hydroxyethylether) or carbinol terminated polydimethylsiloxane.

11. The inkjet ink composition of claims 1 to 10 wherein the water-dispersible polyester ionomer is represented by Formula I: 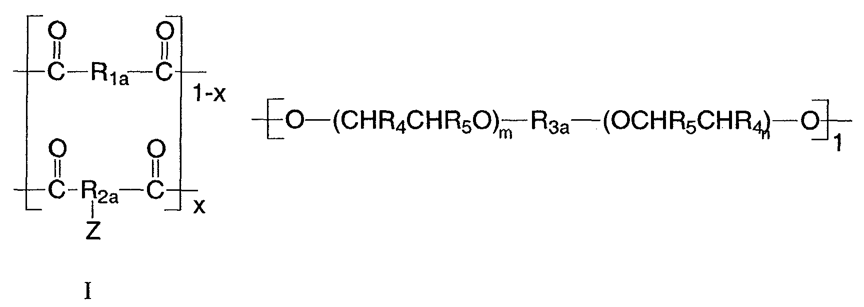 wherein:
R₁ₐ and R₂ₐ independently represents a saturated or unsaturated divalent aliphatic, cyclic or aromatic hydrocarbon group or combinations thereof;
Z represents an ionic moiety derived from a sulfonic acid;
x represents a mole fraction from about 0.05 to about 0.3;
R₃ₐ represents an alkylene group of 1 to about 16 carbon atoms; a cycloalkylene group of 5 to about 20 carbon atoms; a cyclobisalkylene group of about 8 to about 20 carbon atoms, a bi- or tri-cycloalkylene group of about 7 to about 16 carbon atoms, a bi- or tri-cyclobisalkylene group of about 9 to about 18 carbon atoms, an arenebisalkylene group of from 8 to about 20 carbon atoms, an arylene group of 6 to about 12 carbon atoms, or a carbinol-terminated polydimethylsiloxane segment;
R₄ and R₅ each independently represents H, a substituted or unsubstituted alkyl group of about 1 to about 6 carbon atoms, or a substituted or unsubstituted aryl group of about 6 to about 12 carbon atoms;
m and n independently represents an integer of 0 to 4.

12. The inkjet ink composition of claims 1 to 11 wherein the water dispersible sulfonated polyester is present in the inkjet ink composition in the amount of from 0.1% to 10% by weight.

13. The inkjet ink composition of claims 1 to 12 wherein the pigment is C. I. Pigment Red 122, C. I. Pigment Yellow 74, C. I. Pigment Yellow 155, C. I. Pigment Yellow 128, or C. I. Pigment Blue PB15:3.

14. The inkjet ink composition of claims 1 to 12 wherein the pigment is a bridged aluminum phthalocyanine.

15. An inkjet printing method, comprising the steps of:
providing an inkjet printer having a piezo print head, said printer being responsive to digital data signals;
loading the printer with an inkjet ink composition according to claims 1 to 14; and
printing in response to the digital data signals.
